# EUROPÄISCHE PATENTANMELDUNG

(11) **EP 2 703 554 A1**
(43) Veröffentlichungstag der Anmeldung: **05.03.2014**
(21) Anmeldenummer: 13181433.7
(22) Anmeldetag: 23.08.2013
(51) Int. Cl.: D06M 10/00, D06P 5/20, D06Q 1/02, B23K 26/40, D06C 23/00, B44C 1/22

(54) **Verfahren zum Behandeln von Textil-Stoffen**

(30) Priorität: 28.08.2012 DE 102012016963
(71) Anmelder: Alexander, Helmut, 27798 Hude (DE)
(72) Erfinder: Alexander, Helmut, 27798 Hude (DE)
(74) Vertreter: Jabbusch, Matthias

(57) **Zusammenfassung**

Bei einem Verfahren zum Behandeln von Textil-Stoffen, insbesondere zum Ausschmücken von Bekleidungsstücken aus zumindest einem Textil-Stoff, ist vorgesehen, dass wenigstens ein Laser verwendet wird, dessen Laserstrahl auf den zu behandelnden Textil-Stoff geführt wird.

## Beschreibung

Die Erfindung betrifft ein Verfahren zum Behandeln von Textil-Stoffen, insbesondere zum Ausschmücken von Bekleidungsstücken aus zumindest einem Textil-Stoff.

Bei einem Behandeln von Textil-Stoffen ist häufig das Ausschmücken eines aus Textil-Stoffen hergestellten Bekleidungsstückes das Ziel. Auch wenn ein Bekleidungsstück bereits fertig hergestellt ist, kann anschließend an seinen Abschnitten eine Behandlung von Textil-Stoffen stattfinden, um das Bekleidungsstück auszuschmücken.

Bekannte Verfahren zum Behandeln von Textil-Stoffen sind beispielsweise das Bedrucken der Stoffe, das Anbringen von Stickereien oder auch das Anbringen von Aufbügelabschnitten. Schließlich werden insbesondere Jeans-Textil-Stoffe bereits vor Verkauf in Streifen gerissen oder es werden Löcher appliziert.

Gerade die in Jeans-Stoffe eingebrachten Löcher bzw. Risse folgen regelmäßig keiner Kontur. Sie sehen lediglich wie durch längeres Tragen entstanden aus.

Der Erfindung liegt die Aufgabe zugrunde, ein Verfahren der eingangs genannten Gattung aufzuzeigen, mit dem in Bekleidungsstücke interessante Ausschmücken einbringbar sind, insbesondere in Jeans-Bekleidungsstücken motivartige Ausschmückungen.

Diese Aufgabe ist erfindungsgemäß dadurch gelöst, dass bei dem oben genannten Verfahren wenigstens ein Laser verwendet wird, dessen Laserstrahl auf den zu behandelnden Textil-Stoff geführt wird.

Bei dem erfindungsgemäßen Verfahren wird mit einem Laserstrahl auf den Textil-Stoff geschossen. Der Laserstrahl trifft auf die Oberfläche des Textil-Stoffes auf und beeinflusst diese. Auf diese Weise ist eine Ausschmückung in den Stoff einbringbar, dabei mit dem Vorteil, dass der Laser eine sehr fokussierte Lichtstrahlung bereitstellt, mit welcher auf der Oberfläche des Textilstoffes quasi gezeichnet werden kann. Führungen im zweidimensionalen Feld für Laser sind im Stand der Technik bekannt, mit ihnen kann ein Laser auf exakt vorgegebenen Bahnen geführt werden. Diese Bahnen können nach Abfahren in Textil-Stoffen ein Motiv ergeben, das weit über ein bloßes Zerschneiden des Stoffes hinausgeht.

Der Laser wird gerade so eingestellt, dass der Textil-Stoff auf keinen Fall zerstört wird. Beispielsweise wird der Textil-Stoff nach einer Weiterbildung der Erfindung mit dem Laser lediglich angeschmolzen. Dann findet nur eine Behandlung der Oberfläche statt, der Stoff wird nicht durchtrennt, so dass die Trageeigenschaften eines aus diesem Stoff gefertigten Bekleidungsstückes im Wesentlichen erhalten sind. Mit einem derartigen Anschmelzen kann zugleich eine Entfärbung gefärbter Textil-Stoffe durchgeführt werden. Der Laser kann also auch zur partiellen Aufhellung dienen, aufgrund der Fokussierung des Laser können diese Aufhellungen sehr fein gezeichnet werden.

Alternativ kann vorgesehen sein, dass der Textil-Stoff mit dem Laser geschnitten wird. Mit dem Laser können Schnitte eingebracht werden, es können auch Abschnitte aus dem Textil-Stoff herausgeschnitten werden. Das Schneiden bzw. Herausschneiden kann dazu eingesetzt werden, im Textil-Stoff ein Motiv abzubilden. Wird ein Textil-Stoff mit dem Laser kurzzeitig behandelt, tritt ein Anschmelzen bzw. Entfärben ein. Das längere Beeinflussen des Textil-Stoffes mit dem Laser führt dann zum Schneiden.

Für das erfindungsgemäße Verfahren können schließlich handelsüblich ND-YAG - Laser oder CO₂ - Laser eingesetzt werden. Diese werden vorzugsweise für dieses Verfahren mit einer Leistung von etwa 2.000 Watt gefahren.

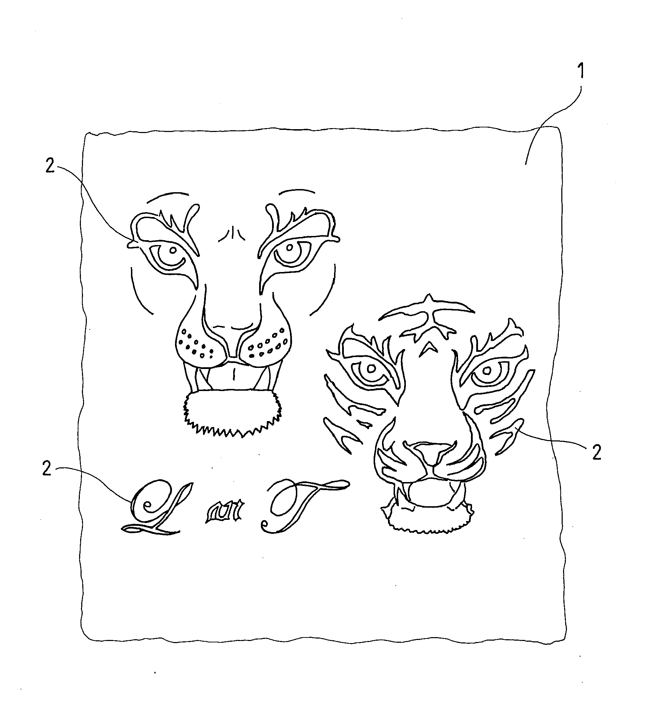

Ein Ausführungsbeispiel der Erfindung, aus dem sich weitere erfinderische Merkmale ergeben, ist in der Zeichnung dargestellt. Die einzige Figur der Zeichnung zeigt einen Abschnitt eines Textil-Stoffes mit Ausschmückungen.

Der Textil-Stoff 1 ist beispielsweise ein Jeans-Stoff. In den Textil-Stoff 1 sind Ausschmückungen 2,3 eingebracht.

Das Einbringen dieser Ausschmückungen 2,3 erfolgte verfahrensgemäß mit einem Laser. Die Ausschmückungen 2, welche jeweils motivartig Tigerköpfe darstellen, sind Schnitte und Ausschnitte im Textil-Stoff 1, während die Ausschmückung 3, eine Buchstabenfolge, durch ein Anschmelzen des Textil-Stoffes 1 hergestellt ist. Beim Anschmelzen des Textil-Stoffes 1 erfolgt ein Aufhellen desselben, da eine Entfärbung stattfindet.

## Patentansprüche

1. Verfahren zum Behandeln von Textil-Stoffen, insbesondere zum Ausschmücken von Bekleidungsstücken aus zumindest einem Textil-Stoff,
**dadurch gekennzeichnet,**
**dass** wenigstens ein Laser verwendet wird, dessen Laserstrahl auf den zu behandelnden Textil-Stoff (1) geführt wird.

2. Verfahren nach Anspruch 1, **dadurch gekennzeichnet, dass** der Textil-Stoff (1) mit dem Laser angeschmolzen wird.

3. Verfahren nach Anspruch 1, **dadurch gekennzeichnet, dass** der Textil-Stoff (1) mit dem Laser geschnitten wird.

4. Verfahren nach einem der Ansprüche 1 bis 3, **dadurch gekennzeichnet, dass** ein ND-YAG-Laser mit einer Leistung von etwa 2.000 Watt verwendet wird.

5. Verfahren nach einem der Ansprüche 1 bis 3, **dadurch gekennzeichnet, dass** ein Kohlendioxid-Laser mit einer Leistung von etwa 2.000 Watt verwendet wird.
